Europäisches Patentamt

European Patent Office

Office européen des brevets

(19)

(11) **EP 0 776 164 B1**

(12) # FASCICULE DE BREVET EUROPEEN

(45) Date de publication et mention
de la délivrance du brevet:
**12.05.1999 Bulletin 1999/19**

(21) Numéro de dépôt: **94923773.9**

(22) Date de dépôt: **03.08.1994**

(51) Int. Cl.$^6$: **A23B 7/02**, A23L 3/015

(86) Numéro de dépôt international:
**PCT/FR94/00975**

(87) Numéro de publication internationale:
**WO 95/04466 (16.02.1995 Gazette 1995/08)**

(54) **PROCEDE DE TRAITEMENT DE PRODUITS VEGETAUX EN VUE DE LA MODIFICATION DE LEUR TEXTURE, INSTALLATION POUR LA MISE EN ŒUVRE D'UN TEL PROCEDE ET PRODUITS AINSI REALISES**

VERFAHREN UND VORRICHTUNG ZUR BEHANDLUNG VON PFLANZLICHEN PRODUKTEN

METHOD FOR PROCESSING PHYTOGENIC MATERIALS TO CHANGE THEIR TEXTURE, APPARATUS THEREFOR, AND RESULTING MATERIALS

(84) Etats contractants désignés:
**AT BE CH DE DK ES GB GR IE IT LI LU MC NL PT SE**

(30) Priorité: **06.08.1993 FR 9309728**

(43) Date de publication de la demande:
**04.06.1997 Bulletin 1997/23**

(73) Titulaires:
• **GRADIENT,
Centre de Transfert,
Université de Technologie de Compiègne
F-60200 Compiègne (FR)**
• **UNIVERSAL DEHYDRATES S.A.
02350 Liesse (FR)**

(72) Inventeurs:
• **ALLAF, Karim
F-17000 La Rochelle (FR)**
• **LOUKA, Nicolas
Avenue Jean Monet F-17000 La Rochelle (FR)**

• **PARENT, Francis
F-02270 Nouvion-et-Catillon (FR)**
• **BOUVIER, Jean-marie
F-69006 Lyon (FR)**
• **FORGET, Michel
F-08300 Bergnicourt (FR)**

(74) Mandataire: **Pernez, Helga
Breese-Majerowicz,
3, avenue de l'Opéra
75001 Paris (FR)**

(56) Documents cités:
EP-A- 0 435 302          EP-A- 0 455 976
EP-A- 0 525 213          FR-A- 2 618 981

• PATENT ABSTRACTS OF JAPAN vol. 13, no. 414
(C-635) 13 Septembre 1989 & JP,A,01 153 036
(HOUSE FOOD IND CO. LTD.) 15 Juin 1989
• PATENT ABSTRACTS OF JAPAN vol. 9, no. 5 (C-
260) 10 Janvier 1985 & JP,A,59 159 739 (HAUSU
SHIYOKUHIN KOGYO KK) 10 Septembre 1984

**Description**

La présente invention concerne un procédé de traitement de biologiques, en vue de la modification des propriétés biologiques, mécaniques, texturales, notamment en vue de la préparation de produits alimentaires soufflés, de produits alimentaires déshydratés, ou en vue d'utiliser ou d'améliorer les opérations d'extraction d'essences ou d'huiles essentielles, ou encore en vue de traitements bactéricides.

On connaît dans l'état de la technique des procédés de traitement de produits biologiques en vue de la modification de leur texture, notamment des procédés de déshydratation, comportant:

- une étape d'introduction des produits biologiques dans une enceinte hermétique ;
- une étape de chauffage des produits disposés dans l'enceinte, lesdits produits étant soumis à une pression supérieure à la pression atmosphérique ;
- une étape ultérieure de détente.

Le brevet européen EP525213 décrit un tel procédé de déshydratation de morceaux de légumes, de fruits ou de grains, consistant en plusieurs étapes :

- Mise sous vide de l'enceinte dans laquelle sont disposés les produits à déshydrater, et du dispositif d'adsorption jusqu'à une pression partielle d'air dans ladite enceinte, comprise entre 1 et 2 mbar,
- Remontée de la pression totale de l'enceinte entre 7 et 200 mbar par introduction d'un gaz caloporteur,
- Maintien de la pression désirée,
- Arrêt du fonctionnement,
- Mise a la pression atmosphérique de l'enceinte et du dispositif d'adsorption.

Un autre brevet de l'art antérieur, le brevet européen EP435302 décrit un procédé de déshydratation totale ou partielle de morceaux de produits entiers de biologiques du type légumes, fruits, fleurs, dispositif de déshydratation et produits correspondants, consistant en une succession d'étapes :

- Mise sous vide de l'enceinte dans laquelle sont disposés les produits parés sur des plateaux,
- Chauffage de la paroi de l'enceinte,
- Introduction de vapeur d'eau dans l'enceinte,
- Remise sous vide de celle-ci
- Chauffage des plateaux
- Remise à la pression atmosphérique de l'enceinte.

Le brevet européen EP0421902 divulgue un procède de séchage de pièces de bois qui consiste a :

- Introduire les pièces à sécher dans l'enceinte qui est ensuite fermée hermétiquement,
- Élever la température interne de l'enceinte a une valeur comprise entre 50 et 90 °C,
- Stabiliser la température interne de l'enceinte avec celle des pièces en ménageant une étape de temporisation d'une durée d'au moins une minute,
- Soumettre ensuite l'intérieur de l'enceinte hermétique a un vide partiel compris entre 0,5 et 0 bar pendant une durée comprise entre 30 secondes et 3 minutes, tout en assurant, à l'intérieur de l'enceinte, une recirculation forcée de l'air sur les pièces à sécher,
- Soumettre de nouveau l'intérieur de l'enceinte à la pression atmosphérique ambiante,
   Un autre document de l'art antérieur, le brevet français FR2618981 décrit un procédé de traitement de légumes frais. Selon ce document, on traite les légumes à la vapeur dans une enceinte étanche et après traitement on fait le vide dans l'enceinte.

Ce document précise que la communication entre la source de vide et l'enceinte fait baisser lentement la pression dans l'enceinte, la phase de réduction de la pression durant environ deux minutes quarante-cinq secondes, voire neuf minutes dans un autre essai mentionné dans ce document de l'art antérieur.

De façon générale, la phase de détente prévue dans les documents de l'art antérieur est uniquement destinée à produire un effet thermodynamique d'évaporation sous vide.

Un autre document de l'art antérieur, le brevet européen EP0455976 divulgue un procédé de séchage consistant à accompagner le séchage par une détente pendant une durée inférieure à 30 secondes.

Ce document ne concerne pas un procédé destiné à la modification de la texture du produit végétal, mais un procédé de séchages de produits.

La première phrase du brevet EP0455976 et le préambule de la revendication principale précise sans ambiguïté que l'objet de l'invention est le séchage de produits biologiques.

L'enseignement de ce document de l'art antérieur correspond à un séchage accompagné (et non pas suivi) par une phase de détente s'étalant sur une période inférieure à 30 secondes. Cette durée constitue un ordre de grandeur significativement différent de la durée de la détente brusque, qui est de l'ordre de la seconde.

L'effet technique de la détente lente selon EP455976 est d'ailleurs mentionné dans ce document : elle a pour but de provoquer une "ouverture" des cellules de manière à permettre un équilibrage des pressions en vue d'une meilleure diffusion de la vapeur d'eau. (voir page 3 lignes 1 - 5 de la demande de brevet EP455976) . Il apparaît par l'expérimentation que des détentes effectuées pendant des durées de l'ordre de 30 secondes se traduisent par une simple amélioration de la diffusion de la vapeur d'eau qui favorise la phase de séchage, mais ne modifie en aucune manière la microstructure du matériau.

L'objet de la présente invention est de proposer un procédé de traitement qui comporte en outre une étape de détente brusque produisant un effet mécanique sur les produits contenus dans l'enceinte de traitement, après une phase de chauffage et de mise sous pression de ces produits. Cette détente brusque provoque une vaporisation brutale de l'eau contenue dans le produits végétale, qui se traduit pour certains biologiques par une expansion du produit. On obtient alors une structure légèrement spongieuse, due à la présence de microcavités, favorisant le reprise d'humidité ultérieure lorsque le procédé de traitement a pour but la production d'aliments déshydratés, ou l'extraction d'essences, d'huiles essentielles ou d'autres molécules lorsque le procédé de traitement a pour but la production de telles substances. Par ailleurs, la détente brusque provoque un refroidissement instantané du produit, ce qui permet de réduite les dégradations thermiques.

L'invention concerne plus particulièrement un procédé de traitement comportant une phase de détente brusque pendant laquelle la vitesse $\frac{\Delta P}{\Delta T}$ de la variation de pression à l'intérieur de l'enceinte est supérieure à 500 millibars par secondes, et de préférence supérieure à 1 bars par seconde, l'amplitude $\Delta P$ de la variation pendant ladite phase de détente brusque étant supérieure à 1 bar. De préférence, la durée de la phase de détente brusque est inférieure à 0,5 secondes.

Avantageusement, le procédé selon l'invention comporte une étape intermédiaire de détente lente préalablement à l'étape de chauffage et de mise sous pression de l'enceinte.

De préférence, l'augmentation de la température pendant l'étape de chauffage s'effectue par paliers, la température étant maintenue sensiblement constante après chaque élévation de température. Dans le cas d'un chauffage par vapeur d'eau sèche, l'augmentation de pression pendant l'étape de chauffage s'effectue également par paliers, les cycles de variation de la pression étant sensiblement synchronisés avec les cycles de variation de la température.

Avantageusement, la pression à l'intérieur de l'enceinte, à l'issue de la phase de détente brusque, est inférieure à 0,5 bars.

L'invention concerne également un procédé comportant une étape initiale de réglage des paramètres relatifs à la pression initiale $P_i$ régnant dans l'enceinte avant la phase de détente brusque, et la pression nominale $P_r$ dans un réservoir de vide mis en communication avec l'enceinte pendant l'étape de détente brusque, la durée $t_c$ de la phase de chauffage sous pression, par ajustages successifs après chaque cycle de traitement, lesdits paramètres étant fixés lorsque le produit final est considérés comme satisfaisant.

L'invention concerne encore une installation pour le traitement de produits biologiques en vue de la modification de leur texture du type comportant une enceinte destinée à recevoir les produits à traiter, des moyens de chauffage de ladite enceinte, et des moyens pour augmenter la pression dans ladite enceinte et des moyens de pour faire le vide dans ladite enceinte, caractérisé en ce que ladite installation comporte en outre un réservoir d'une contenance au moins 5 fois supérieure, et de préférence au moins 20 fois supérieure à la contenance de l'enceinte de traitement, une vanne à commande rapide étant intercalée entre l'enceinte de traitement et le réservoir de vide, le réservoir de vide étant relié à une pompe à vide, le débit de la vanne à commande rapide étant déterminé de façon à permettre un équilibrage des pressions entre l'enceinte et le réservoir à vide dans un délai inférieur à la seconde.

Avantageusement, l'installation selon l'invention comporte une seconde enceinte de récupération des produits traités reliés à l'enceinte de traitement par un conduit principal dans lequel débouche un conduit secondaire provenant du réservoir de vide, la vanne à commande rapide étant disposée entre l'enceinte de traitement et le raccordement du conduit secondaire sur le conduit principal. Ce mode de réalisation permet de profiter de l'effet d'aspiration produit par l'ouverture de la vanne pour expulser les produits traités hors de l'enceinte, et de réduire ainsi les manipulations, ou le maintien des parois de l'enceinte à une température élevée.

L'invention concerne également des produits alimentaires instantanément réhydratables séchés, présentant un taux d'expansion compris entre 1,5 et 5.

L'invention sera mieux comprise à la lecture de la description qui suit, faisant référence aux dessins annexés où:

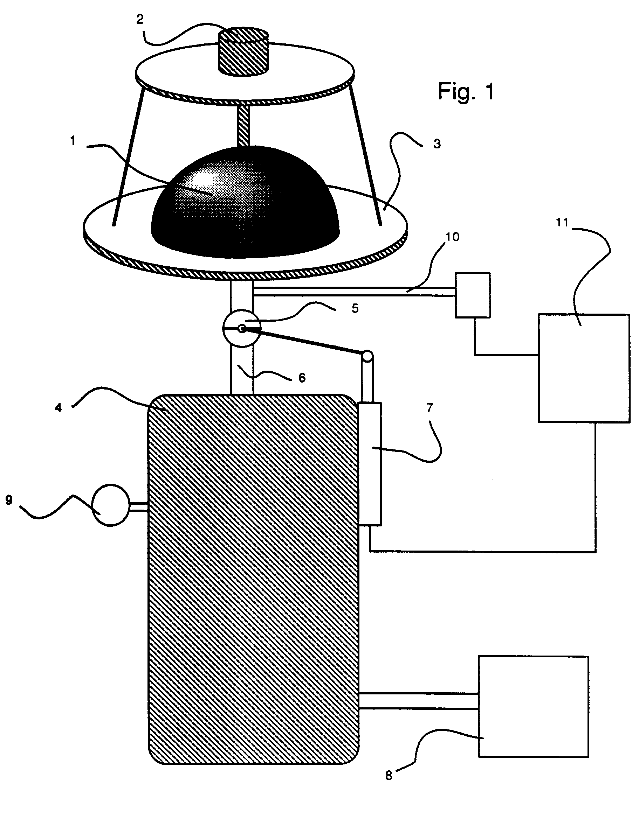

-   la figure 1 représente une vue schématique d'une installation conforme à l'invention ;

- la figure 2 représente les courbes de variation de la pression et de la température.

La figure 3 représente une vue schématique d'une installation selon une variante de l'invention.

L'installation comporte une enceinte de traitement (1) en forme de cloche d'une dimension de 5 litres disposée sur un plateau (3). Un vérin (2) assure l'ouverture de l'enceinte, ou sa fermeture étanche pendant le cycle de traitement. Éventuellement, un manomètre non représenté sur la figure, et un thermocouple, permettent de vérifier la pression et la température dans l'enceinte.

L'enceinte (1) est reliée à un réservoir de vide (4) d'un volume intérieur de 200 litres par un conduit (6) de forte section et d'une vanne (5) à commande rapide. Un vérin (7) assure l'ouverture et la fermeture de la vanne (5). Une pompe à vide (8) de type connu est reliée au réservoir de vide (4) pour réaliser une dépression initiale, et maintenir ainsi la dépression nominale dans le réservoir à vide (4).

Un manomètre (9) permet de vérifier la dépression nominale dans le réservoir à vide (4).

Une arrivée (10) d'un fluide caloriporteur, par exemple de la vapeur d'eau débouche dans l'enceinte (1). L'enceinte comporte éventuellement une source de chauffage additionnelle, par convection, par rayonnement infrarouge, ou tout autre type de chauffage connu. L'installation est pilotée par un micro-ordinateur (11) commandant les séquences de pressurisation-dépressurisation et contrôlant la température à l'intérieur de l'enceinte.

Le fonctionnement de l'installation est le suivant.

On procède tout d'abord à une phase de paramètrage, pendant laquelle on optimise de façon expérimentale certains paramètres réglables, notamment:

- La pression $P_0$ dans l'enceinte, juste avant la phase de chauffage sous pression ;
- La pression $P_{max}$ maximale dans l'enceinte,
- La température $Temp_{max}$ dans l'enceinte, avant la phase de détente brusque ;
- La durée $T_{chauff.}$ de l'étape de chauffage sous pression ;
- La pression nominale $P_{nom.}$ dans le réservoir de vide (4).

Ces paramètres sont enregistrés dans la mémoire vive du micro-ordinateur et sont réactualisé à chaque cycle de la phase de paramètrage.

Le paramètrage s'effectue en observant l'incidence d'une modification de l'un des paramètres sur les qualités du produit végétal traité. On procède pour cela à des incrémentations et décrémentations successives jusqu'à ce que chacun des paramètres soit optimisé. A la fin de cette phase de paramètrage, les données enregistrées dans la mémoire vive du microordinateur sont déterminées, et on peut procéder à une mise en oeuvre opérationnelle de l'installation.

La température maximale est déterminée de façon à atteindre sans trop la dépasser la phase de transition vitreuse du produit traité, se traduisant par un amollissement de sa structure.

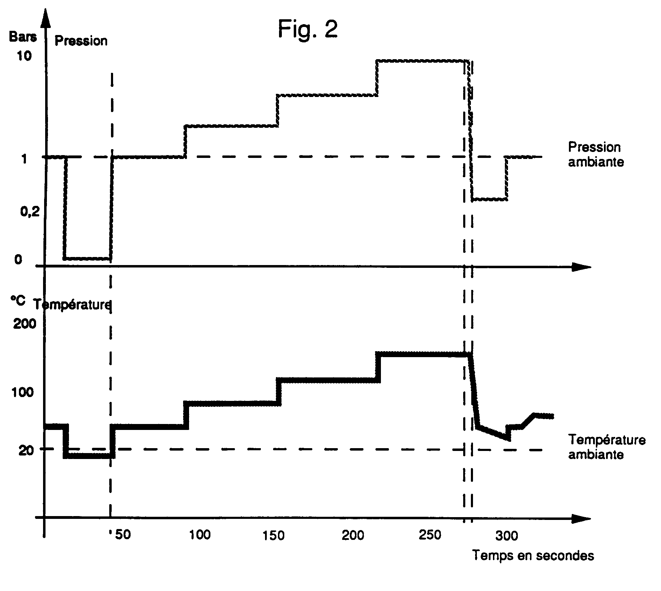

Le procédé de traitement dans l'exemple décrit comporte une phase facultative de prédétente, une phase de montée de la température et de la pression, et une phase de détente brusque. La figure 2 représente la courbe de pression et de température, pour un exemple de traitement.

Les produits alimentaires sont introduits dans l'enceinte après un éventuel prétraitement. Ils sont constitués par des lamelles fines de biologiques. A titre d'exemple, l'épaisseur des lamelles est comprise entre 1 et 5 millimètres.

ÉTAPE 1.

La première étape consiste à effectuer un vide partiel dans l'enceinte (1), en ouvrant brièvement la vanne (5) . La dépression provoque un léger refroidissement des produits du fait de la détente. La dépression est maintenue pendant une courte durée, de l'ordre d'une minute, et de préférence entre 10 secondes et 5 minutes. Toutefois, la durée de cette phase n'est pas critique.

La phase de prédétente a pour but d'améliorer et d'accélérer le transfert de chaleur vers le produit au cours de l'étape de chauffage.

ÉTAPE 2.

L'étape suivante consiste à monter progressivement la température et la pression. La température augmente par paliers successifs depuis la température ambiante jusqu'à une température maximale $Temp_{max}$ dépendant de la nature du produit à traiter. Le chauffage peut être réalisé par injection de vapeur d'eau, par convection, par infrarouge, ou par une combinaison de différents moyens de chauffage.

Pendant cette étape, la pression de la vapeur d'eau à l'intérieur de l'enceinte augmente également par paliers. Cette étape dure de quelques secondes à quelques dizaines de minutes. Dans l'exemple décrit, la température varie entre la température ambiante et 175 °C, et la pression varie de 1 bar à 9 bars. De préférence, la durée de la phase de chauffage n'excède pas une minute, et la température de chauffage ne dépasse que faiblement la température de ramollissement du produit à traiter.

ÉTAPE 3.

L'étape nouvelle de l'invention consiste à faire varier rapidement la pression à l'issue de la phase de chauffage. Cette variation de pression dépasse dans l'exemple décrit 9,5 bars en moins d'une demi-seconde. Simultanément, le chauffage est interrompu, et la détente produit un abaissement brusque de la température. Le produit est ensuite extrait de l'enceinte.

## EXEMPLE DE MISE EN OEUVRE DU PROCÈDE POUR LE TRAITEMENT DE POMMES DE TERRE

| Taux d'expansion | Conditions opératoires | Qualité |
|---|---|---|
| $\varepsilon = 1,75$ | <u>dimensions</u> : $10X10X2mm^3$<br>W (Taux d'humidité initial) :<br>       13 %<br><br><u>Mode de chauffage</u> :<br>$P_0$ :     4,75bar<br>$T_{chauff.}$ :    20 secondes<br>$P_{nom.}$ :     0,1bar<br>Durée de la détente brusque : 0,5 secondes | Très bonne qualité aux niveaux de la couleur (claire), la capacité de réhydratation, et la texture. |
| $\varepsilon = 1,75$ | <u>dimension</u> : $10X19X2mm^3$<br>W :     23 %<br><br><u>Mode de chauffage</u> :<br>vapeur d'eau saturante à<br>$P_0$ :     6bar<br>$T_{chauff.}$ :    40 secondes<br>$P_{nom.}$ :     0,1bar<br>Durée de la détente brusque : 0,5 secondes | Couleur : foncée<br><br>Capacité de ré hydratation : moyenne<br><br>Texture : bonne croustillance. |
| $\varepsilon = 1,9$ | <u>dimension</u> : $10X19X2mm^3$<br>W :     23 %<br><br><u>Mode de chauffage</u> :<br>vapeur d'eau saturante à<br>$P_0$ :    montée par paliers :<br>$T_{chauff.1}$ :   45 s à 3,5 bar puis<br>$T_{chauff 2}$ :   20 s à 5 bar.<br>$P_{nom.}$ :     0,1bar<br>Durée de la détente brusque : 0,5 secondes | Couleur : claire naturelle<br><br>Capacité de réhydratation : rapide<br><br>Texture : bonne croustillance. |
| $\varepsilon = 1,9$ | <u>dimension</u> : $10X10X2mm^3$<br>W :     23 %<br><br><u>Mode de chauffage</u> :<br>vapeur d'eau saturante à<br>$P_0$ :     6bar<br>$tT_{chauff.}$ :   70 secondes<br>$P_{nom.}$ :     0,1bar<br>Durée de la détente brusque : 0,5 secondes | Couleur : Très foncée<br><br>Capacité de réhydratation : médiocre<br><br>Texture : croustillante |
| $\varepsilon = 2,2$ | <u>dimension</u> : $10X10X2mm^3$<br>W :     23 %<br><br><u>Mode de chauffage</u> :<br>infra rouge<br>$P_0$ :     6bar<br>$T_{chauff.}$ :   40 secondes<br>$P_{nom.}$ : 2 bar d'air comprimé<br>Durée de la détente brusque : 0,5 secondes | couleur très variable<br><br>Capacité de réhydratation : bonne à moyenne<br><br>Texture : croustillante |

## EXEMPLE DE MISE EN OEUVRE DU PROCÈDE POUR LE TRAITEMENT DE CAROTTES

| $\varepsilon = 2,2$ | dimension : $16 \times 16 \times 2mm^3$<br>W : 22%<br><br>Mode de chauffage :<br>vapeur d'eau saturante à<br>$P_0$ : montée par paliers :<br>$T_{chauff.1}$ : 25 s à 3 bar puis<br>$T_{chauff.2}$ : 20 s à 5 bar.<br>$P_{nom.}$ : 0,1bar<br>Durée de la détente brusque : 0,5 secondes | Très bonne qualité aux niveaux de la couleur (naturelle), la capacité de réhydratation (réhydratation très rapide) et la texture |
|---|---|---|
| $\varepsilon = 2,2$ | dimension : $16 \times 16 \times 2mm^3$<br>W : 23 %<br><br>Mode de chauffage :<br>vapeur d'eau saturante à<br>$P_0$ : 5 bar<br>$T_{chauff.}$ : 45 s<br>$P_{nom.}$ : 0,1bar<br>Durée de la détente brusque : 0,5 secondes | Couleur : foncée<br><br>Capacité de réhydratation : moyenne<br><br>Texture : bonne croustillance. |
| $\varepsilon = 1,9$ | dimension : $16 \times 16 \times 2mm^3$<br>W : 23 %<br><br>Mode de chauffage :<br>vapeur d'eau saturante à<br>$P_0$ : 3bar<br>$T_{chauff.}$ : 45 secondes<br>$P_{nom.}$ : 0,1bar<br>Durée de la détente brusque : 0,5 secondes | Couleur : naturelle<br><br>Capacité de réhydratation : rapide<br><br>Texture : bonne croustillante |
| $\varepsilon = 2,2$ | dimension : $10 \times 10 \times 2mm^3$<br>W : 150 %<br><br>Mode de chauffage :<br>infra rouge<br>$P_0$ : 6bar<br>$T_{chauff.}$ : 3 minutes<br>$P_{nom.}$ : 0,1 bar<br>Durée de la détente brusque : 0,5 secondes | couleur très variable<br><br>Capacité de réhydratation : bonne à moyenne<br><br>Texture : croustillante |

Par "Durée de la détente brusque", on entend la durée nécessaire à l'équilibrage de la pression entre le réservoir de vide et l'enceinte de traitement, après l'ouverture de la vanne à commande rapide, à 10 % près.

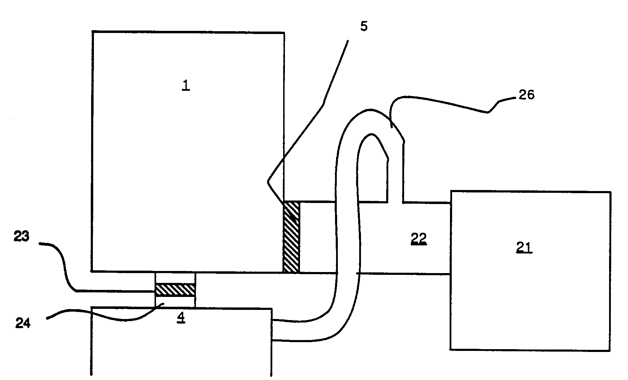

La figure 3 représente une variante de réalisation de l'installation.

L'enceinte (1) communique avec le réservoir de vide (4) par un premier conduit (24) muni d'une vanne de commande (23). L'installation comporte par ailleurs un conduit tubulaire (22) reliant l'enceinte de traitement (1) avec une enceinte de récupération (21), de forme cylindrique ou conique.

Ce conduit (22) est relié au réservoir de vide (4) par l'intermédiaire d'un conduit (26). Le conduit (22) débouche dans l'enceinte de récupération (21) tangentiellement, de façon à provoquer un effet de cyclone. Ce conduit (26) débouche dans le conduit tubulaire (22) dans la partie supérieure. Une vanne à commande rapide (5) est disposée entre l'enceinte de traitement (1) et le raccordement entre le conduit tubulaire (22) et le conduit (26).

Au repos, les deux vannes (5) et (23) sont fermées.

De ce fait, le conduit tubulaire (22) et l'enceinte de récupération (21) sont à une dépression correspondant à la pression régnant dans le réservoir de vide (4).

Au démarrage d'un cycle de traitement, on ouvre la vanne (23), ce qui provoque une détente lente dans l'enceinte de traitement (1). La vanne (23) est ensuite de nouveau fermée. A l'issue de la phase de chauffage et de mise sous pression, la vanne à commande rapide (5) est basculée en position d'ouverture, ce qui provoque la détente brusque à l'intérieur de l'enceinte de traitement (1). Cette détente brusque provoque une aspiration des produits contenus dans l'enceinte de traitement (1), qui sont expulsés dans l'enceinte de récupération (21). La forme cylindrique de l'enceinte de récupération (21) et le raccordement tangentiel du conduit tubulaire (22) provoque un mouvement cyclonique des produits, qui empêche l'agglomération desdits produits traités.

Ceux-ci sont récupérés dans le fond de l'enceinte (21).

**Revendications**

1.  Procédé de traitement de produits biologiques en vue de la modification de leur texture comportant:

    - une étape d'introduction des produits biologiques dans une enceinte (1) hermétique ;
    - une étape de chauffage des produits disposés dans l'enceinte (1), lesdits produits étant soumis à une pression supérieure à la pression atmosphérique ;
    - une étape ultérieure de détente ;
      caractérisé en ce que

      l'étape de détente comporte une phase de détente brusque pendant laquelle la vitesse $\frac{\Delta P}{\Delta T}$ de la variation de pression à l'intérieur de l'enceinte (1) est supérieure à 500 millibars par seconde, l'amplitude $\Delta P$ de la variation pendant ladite phase de détente brusque étant supérieure à 1 bar.

2.  Procédé de traitement de produits biologiques en vue de la modification de leur texture selon la revendication 1 caractérisé en ce que l'étape de détente s'effectue pendant une durée au plus égale à 2 secondes.

3.  Procédé de traitement de produits biologiques en vue de la modification de leur texture selon la revendication 1 caractérisé que la vitesse $\frac{\Delta P}{\Delta T}$ de la variation de pression à l'intérieur de l'enceinte (1) pendant la phase de détente brusque est supérieure à 500 millibars par seconde, la pression s'équilibrant entre le réservoir de vide et l'enceinte de traitement (1) à 10 % près en moins d'une seconde.

4.  Procédé de traitement de produits biologiques en vue de la modification de leur texture selon l'une quelconque des revendications précédentes caractérisé en ce qu'il comporte une étape intermédiaire de détente lente préalablement à l'étape de chauffage et de mise sous pression de l'enceinte (1).

5.  Procédé de traitement de produits biologiques en vue de la modification de leur texture selon l'une quelconque des revendications 1 à 4 caractérisé en ce que l'augmentation de la température pendant l'étape de chauffage s'effectue par paliers, la température étant maintenue sensiblement constante après chaque élévation de température.

6.  Procédé de traitement de produits biologiques en vue de la modification de leur texture selon l'une quelconque des revendications précédentes caractérisé en ce que la température du produit à l'instant précédant la phase de détente brusque étant légèrement supérieure à la température de rigidification du produit.

7.  Procédé de traitement de produits biologiques en vue de la modification de leur texture selon la revendication 5 caractérisé en ce que l'augmentation de pression pendant l'étape de chauffage par vapeur d'eau s'effectue par paliers, les cycles de variation de la pression de la vapeur d'eau étant sensiblement synchronisés avec les cycles de variation de la température.

8.  Procédé de traitement de produits biologiques en vue de la modification de leur texture selon l'une quelconque des revendications précédentes caractérisé en ce que la pression à l'intérieur de l'enceinte (1), à l'issue de la phase de détente brusque, est inférieure à 0,5 bars.

9.  Procédé de traitement de produits biologiques en vue de la modification de leur texture selon l'une quelconque des revendications précédentes caractérisé en ce que l'on procède à une étape initiale de réglage des paramètres relatifs à la pression initiale $P_i$ régnant dans l'enceinte (1) avant la phase de détente brusque, et la pression nominale $P_r$ dans un réservoir de vide (4) mis en communication avec l'enceinte (1) pendant l'étape de détente brusque, la durée $t_c$ de la phase de chauffage sous pression, par ajustages successifs après chaque cycle de traitement, lesdits paramètres étant fixés lorsque le produit final est considérés comme satisfaisant.

10. Installation pour le traitement de produits biologiques en vue de la modification de leur texture du type comportant une enceinte (1) destinée à recevoir les produits à traiter, des moyens de chauffage de ladite enceinte (1), et des moyens pour augmenter la pression dans ladite enceinte (1) et des moyens pour faire le vide dans ladite enceinte (1), caractérisé en ce que ladite installation comporte en outre un réservoir d'une contenance au moins 5 fois supérieure, et de préférence 20 fois supérieure à la contenance de l'enceinte (1) de traitement, une vanne à commande rapide étant intercalée entre l'enceinte (1) de traitement et le réservoir de vide (4), le réservoir de vide (4) étant relié à une pompe à vide, le débit de la vanne à commande rapide étant déterminé de façon à permettre un équilibrage des pressions entre l'enceinte (1) et le réservoir à vide (4) dans un délai inférieur à la seconde.

11. Installation pour le traitement de produits biologiques en vue de la modification de leur texture selon la revendication 10 caractérisé en ce qu'elle comporte une seconde enceinte (21) de récupération des produits traités reliés à l'enceinte (1) de traitement par un conduit principal (22) dans lequel débouche un conduit secondaire (26) provenant du réservoir de vide (4), la vanne à commande rapide étant disposée entre l'enceinte (1) de traitement et le raccordement du conduit secondaire sur le conduit principal.

12. Installation pour le traitement de produits biologiques en vue de la modificaiton de leur texture selon la revendication 11 caractérisé en ce que le conduit principal (22) débouche tangentiellement dans une enceinte de récupération (21) de forme circulaire.

13. Produits alimentaires instantanément réhydratables séchés susceptibles d'être obtenus selon la revendication 1 présentant un taux d'expansion compris entre 1,5 et 5.

## Claims

1. Treatment process for biological products in order to modify their texture, comprising:

   - a step in which biological products are added into a hermetic chamber (1);
   - a step in which the products placed in the chamber (1) are heated, the said products being subjected to a pressure exceeding atmospheric pressure;

   - a subsequent expansion step;
     characterized in that
     the expansion step comprises a sudden expansion phase during which the rate $\frac{\Delta P}{\Delta T}$ of change of pressure within the chamber (1) exceeds 500 millibars per second, the amplitude $\Delta P$ of the change in pressure during the said sudden expansion phase exceeding 1 bar.

2. Treatment process for biological products in order to modify their texture according to claim 1, characterized in that the expansion step takes place within a duration not exceeding 2 seconds.

3. Treatment process for biological products in order to modify their texture according to claim 1, characterized in that the rate $\frac{\Delta P}{\Delta T}$ of change of pressure within the chamber (1) during the sudden expansion phase exceeds 500 millibars per second, the pressures in the vacuum tank and the treatment chamber (1) being balanced within 10% in less than one second.

4. Treatment process for biological products in order to modify their texture according to any one of the previous claims, characterized in that it comprises an intermediate slow expansion step prior to the step in which chamber (1) is heated and pressurized.

5. Treatment process for biological products in order to modify their texture according to any one of claims 1 to 4, characterized in that the temperature increase during the heating step is done in stages, the temperature being kept approximately constant after each temperature rise.

6. Treatment process for biological products in order to modify their texture according to any one of the previous claims, characterized in that the temperature of the product at the instant preceding the sudden expansion phase is slightly greater than the product rigidification temperature.

7. Treatment process for biological products in order to modify their texture according to claim 5, characterized in that the pressure increase during the steam heating step is done in stages, the steam pressure variation cycles being approximately synchronized with the temperature variation cycles.

8. Treatment process for biological products in order to modify their texture according to any one of the previous claims, characterized in that the pressure inside the chamber (1) at the end of the sudden expansion phase is less than 0.5 bars.

9. Treatment process for biological products in order to modify their texture according to any one of the previous claims, characterized in that the first step is to adjust the parameters for the initial pressure $P_i$ in the chamber (1) before the sudden expansion phase, the nominal pressure $P_r$ in a vacuum tank (4) put into communication with the chamber (1) during the sudden expansion step, the duration $t_c$ of the pressurized heating phase, by successive adjustments after each treatment cycle, the said parameters being fixed when the final product is considered to be satisfactory.

10. Installation for the treatment of biological products in order to modify their texture of the type comprising a chamber (1) designed to contain products to be treated, means of heating the said chamber (1) and means of increasing the pressure in the said chamber (1) and means of creating a vacuum in the said chamber (1), characterized in that the said installation also comprises a tank with a volume at least 5 times greater, and preferably 20 times greater than the volume of the treatment chamber (1), a fast control valve being inserted between the treatment chamber (1) and the vacuum tank (4), the vacuum tank (4) being connected to a vacuum pump, the flow through the fast control valve being determined so that pressures in the chamber (1) and the vacuum tank (4) are balanced in less than one second.

11. Installation for the treatment of biological products in order to modify their texture according to claim 10, characterized in that it comprises a second chamber (21) for recovery of treated products, connected to the treatment chamber (1) through a main pipe (22) into which leads a secondary pipe (26) from the vacuum tank (4), the fast control valve being located between the treatment chamber (1) and the connection of the secondary pipe onto the main pipe.

12. Installation for the treatment of biological products in order to modify their texture according to claim 11, characterized in that the main pipe (22) leads tangentially into a circular-shaped recovery chamber (21).

13. Instantaneously rehydratable dried food products that can be obtained according to claim 1 with an expansion rate of between 1.5 and 5.

**Patentansprüche**

1. Aufbereitungsverfahren von biologischen Produkten für die Modifizierung ihrer Textur, mit :

   - einer Einführungsetappe der biologischen Produkte in einen hermetischen Raum (1) ;
   - einer Erwärmungsetappe der im Raum (1) angeordneten Produkte, wobei die besagten Produkte einem höheren Druck als dem Luftdruck ausgesetzt werden ;
   - einer späteren Entspannungsetappe ;
   - dadurch gekennzeichnet, dass

     die Entspannungsetappe eine plötzliche Entspannungsphase umfasst, in der die Geschwindigkeit ($\Delta P$ / $\Delta T$) der Druckschwankung innerhalb des Raums (1) grösser ist als 500 Millibar pro Sekunde, während die Amplitude $\Delta P$ der Schwankung während der besagten plötzlichen Entspannungsphase grösser als 1 Bar ist.

2. Aufbereitungsverfahren von biologischen Produkten für die Modifizierung ihrer Textur nach Anspruch 1, dadurch gekennzeichnet, dass die Entspannungsetappe höchstens 2 Sekunden dauert.

3. Aufbereitungsverfahren von biologischen Produkten für die Modifizierung ihrer Textur nach Anspruch 1, dadurch gekennzeichnet, dass die Geschwindigkeit $\Delta P$ / $\Delta T$ der Druckschwankung innerhalb des Raums (1) während der Phase der plötzlichen Entspannung grösser als 500 Millibar pro Sekunde ist, wobei sich der Druck zwischen dem Vakuumbehälter und dem Aufbereitungsraum (1) in weniger als einer Sekunde plus/minus 10 % ausgleicht.

**4.** Aufbereitungsverfahren von biologischen Produkten für die Modifizierung ihrer Textur nach einem der vorstehend genannten Ansprüche, dadurch gekennzeichnet, dass es vor der Erwärmungs- und Druckaufbauetappe des Raums (1) eine langsame Zwischenentspannungsetappe umfasst.

**5.** Aufbereitungsverfahren von biologischen Produkten für die Modifizierung ihrer Textur nach einem der Ansprüche 1 bis 4, dadurch gekennzeichnet, dass die Temperaturerhöhung während der Erwärmungetappe stufenweise erfolgt, wobei die Temperatur nach jeder Temperaturerhöhung etwa konstant gehalten wird.

**6.** Aufbereitungsverfahren von biologischen Produkten für die Modifizierung ihrer Textur nach einem der vorstehend genannten Ansprüche, dadurch gekennzeichnet, dass die Temperatur des Produkts kurz vor der plötzlichen Entspannungsphase höher als die Versteifungs-temperatur des Produkts ist.

**7.** Aufbereitungsverfahren von biologischen Produkten für die Modifizierung ihrer Textur nach Anspruch 3, dadurch gekennzeichnet, dass der Druckaufbau während der Erwärmungsphase durch Wasserdampf stufenweise erfolgt, wobei die Druckschwankungszyklen des Wasserdampfes etwa mit den Temperaturschwankungszyklen synchronisiert sind.

**8.** Aufbereitungsverfahren von biologischen Produkten für die Modifizierung ihrer Textur nach einem der vorstehend genannten Ansprüche, dadurch gekennzeichnet, dass der Druck innerhalb des Raums (1) nach der plötzlichen Entspannungsphase kleiner als 0,5 Bar ist.

**9.** Aufbereitungsverfahren von biologischen Produkten für die Modifizierung ihrer Textur nach einem der vorstehend genannten Ansprüche, dadurch gekennzeichnet, dass man eine anfängliche Einstelletappe der Parameter bezüglich des vor der plötzlichen Entspannungsphase innerhalb des Raums (1) herrschenden Ausgangsdrucks $P_i$ durchführt, und des Nenndrucks $P_r$ in einem Vakuumbehälter (4), der während der plötzlichen Entspannungsphase mit dem Raum (1) verbunden wird, der Dauer $t_c$ der Erwärmungsphase unter Druck, durch aufeinanderfolgende Einstellungen nach jedem Aufbereitungszyklus, wobei die besagten Parameter festgelegt werden, wenn das Endprodukt als zufriedenstellend betrachtet wird.

**10.** Anlage zur Aufbereitung von biologischen Produkten für die Modifizierung ihrer Textur, des Typs mit einem Raum (1) zur Aufnahme der aufzubereitenden Produkte, Erwärmungsmitteln des besagten Raumes (1) und Mitteln zum Druckaufbau im besagten Raum (1), sowie Mitteln zur Herstellung des Vakuums im besagten Raum (1), dadurch gekennzeichnet, dass die besagte Anlage weiters einen Behälter mit einem mindestens 5 Mal und vorzugsweise 20 Mal grösserem Fassungsvermögen als der Verarbeitungsraum umfasst, wobei ein Schnellsteuerventil zwischen dem Aufbereitungsraum (1) und dem Vakuumbehälter (4) angeordnet ist, wobei der Vakuumbehälter (4) an einer Vakuumpumpe angeschlossen ist, während der Durchsatz des Schnellsteuerventils so bestimmt ist, um einen Druckausgleich zwischen dem Raum (1) und dem Vakuumbehälter (4) innerhalb von weniger als einer Sekunde zu ermöglichen.

**11.** Anlage zur Aufbereitung von biologischen Produkten für die Modifizierung ihrer Textur nach Anspruch 10, dadurch gekennzeichnet, dass sie einen zweiten Auffangraum (21) der aufbereiteten Produkte umfasst, der über einen Hauptkanal (22) mit dem Aufbereitungsraum (1) verbunden ist, in den ein aus dem Vakuumbehälter (4) kommender Nebenkanal (26) mündet, wobei das Schnellsteuerventil zwischen dem Aufbereitungsraum (1) und dem Anschluss des Nebenkanals am Hauptkanal angeordnet ist.

**12.** Anlage zur Aufbereitung von biologischen Produkten für die Modifizierung ihrer Textur nach Anspruch 11, dadurch gekennzeichnet, dass der Hauptkanal (22) tangentiell in einen kreisförmigen Auffangraum (21) mündet.

**13.** Getrocknete, schnell rehydratierbare Lebensmittelprodukte, die nach dem Anspruch 1 erhalten werden können und eine Expansionsrate zwischen 1,5 und 5 aufweisen.

Fig. 1

Fig. 2